# NEUE EUROPÄISCHE PATENTSCHRIFT

(11) **EP 2 516 614 B2**
(45) Veröffentlichungstag und Bekanntmachung des Hinweises auf die Entscheidung über den Einspruch: **25.11.2026**
(45) Hinweis auf die Patenterteilung: 21.01.2015
(21) Anmeldenummer: 10798738.0
(22) Anmeldetag: 22.12.2010
(51) Int. Cl.: C12C 7/22, C12C 7/26, C12C 13/00, C12C 7/06, F28D 20/00

(54) **VORRICHTUNG UND VERFAHREN ZUM RÜCKGEWINNEN VON ENERGIE**
DEVICE AND METHOD FOR RECOVERING ENERGY
DISPOSITIF ET PROCÉDÉ DE RÉCUPÉRATION D'ÉNERGIE

(30) Priorität: 23.12.2009 DE 102009055300
(43) Veröffentlichungstag der Anmeldung: 31.10.2012
(73) Patentinhaber: Krones AG, 93073 Neutraubling (DE)
(72) Erfinder: KAMMERLOHER, Helmut, 85354 Freising (DE)
(74) Vertreter: Grünecker Patent- und Rechtsanwälte PartG mbB
(86) Internationale Anmeldenummer: PCT/EP2010/007890
(87) Internationale Veröffentlichungsnummer: WO 2011/076410

(56) Entgegenhaltungen:
- EP-A2- 0 285 009
- DE-A1- 10 139 427
- DE-A1- 102005 021 782
- DE-A1- 3 338 576
- DE-C1- 3 147 620
- DE-C1- 4 304 975
- DE-U1- 202005 020 713
- "Heineken Technical Services I Project services — Report sHertogenbosch Brew house 4 Thermal vapour compression combined with wort vapour condensation" (HTS project code: P. 0426; reference number: OO2002REPOO15) Aart van den Boogaart
- ZACHARIAS P: "Abnahmemessungen an Würzekühlern. Ergebnisse, Mängel, Richtwerte, Folgerungen für die Praxis", BRAUWELT, NUERNBERG, DE, vol. 137, no. 42, 1 January 1997 (1997-01-01), pages 1936 - 1943, XP008136190, ISSN: 0724-696X

## Beschreibung

Die Erfindung betrifft eine Vorrichtung und ein Verfahren zum Rückgewinnen von Energie aus heißer Würze oder heißer Maische für eine Bierbrauerei.

Die Druckschrift DE 43 04 975 C1 zeigt bereits ein Verfahren zum diskontinuierlichen Maische- und Würzekochen bei der Biererzeugung. Dabei wird ein Wärmetauscher eingesetzt, der durch die beim Würzekochen erzeugten Schwaden ein Heizmedium aufheizt, das wiederum über eine Heizung einen Wärmeverbraucher aufwärmt. Das Heizmedium wird rückgeführt und über einen Tank erneut zum Wärmetauscher geleitet. Diese Druckschrift zeigt auch einen weiteren Wärmetauscher, der die Würze kühlt. Der Wärmeträger, der über diesen Wärmetauscher aufgeheizt wird, wird jedoch nicht wieder im Kreislauf über einen entsprechenden Zulauf des Wärmetauschers zugeführt.

Zur Herstellung von Bier sind hohe Mengen an Energie notwendig. Hierfür wird hauptsächlich Primärenergie verwendet und entwertet, bei gleichzeitiger Entstehung von CO₂. Insbesondere für den Maischprozess sowie den Würzekochprozess sind große Energiemengen notwendig.

Um den Primär-Energieeinsatz zu reduzieren, wurde in der Vergangenheit bereits versucht, Energie zurückzugewinnen und an anderen Stellen im Prozess wiedereinzusetzen. Ein wichtiges Beispiel ist hierfür die Rückgewinnung der Brüdenenergie, die bei der Kochung der Würze anfällt. Diese wird dann beim nächsten Sud wieder für die Würzevorwärmung eingesetzt.

Nach der thermischen Behandlung, z.B. Kochen der Würze, hat diese eine maximale Temperatur und wird dann auf Anstelltemperatur (z.B. < 15 °C) abgekühlt. Hierzu sind verschiedene Einrichtungen und Systeme im Einsatz. Das Abkühlen der heißen Würze auf Anstelltemperatur kann über Plattenwärmetauscher erfolgen, wobei dann Frischwasser, oder auf z.B. 6°C abgekühltes Frischwasser (Eiswasser) auf vorzugsweise 75 bis 88 °C erwärmt wird. Das erwärmte Wasser wird dann beispielsweise im Brauwassertank zur weiteren Nutzung, beispielsweise zum Einmaischen oder Anschwänzen verwendet.

Das bei der hier beschriebenen Würzekühlung erzeugte warme Brauwasser übersteigt in vielen Fällen den Warmwasserbedarf einer gesamten Brauerei. Insbesondere in wärmeren Regionen oder zur Mitte oder zum Ende der Produktionswoche hin kommt es zu einem deutlichen Warmwasserüberschuss im Brauwassertank. Oft ist in diesem Brauwassertank so viel Energie, dass Warmwasser über den Gully verworfen werden muss. Kann oder darf keine große Menge an Warmwasser über den Kanal abgeleitet werden, muss die bei der Kühlung der Würze erzeugte Warmwassermenge durch Einsatz eines Kühlers unter hohem Energieeinsatz (vornehmlich elektrische Energie) reduziert (abgekühlt) werden. So ist es nicht verwunderlich, dass die Kälteanlage etwa 40 % und mehr des gesamten Strombedarfs einer Brauerei ausmacht. Zusammenfassend kann gesagt werden, dass bei den bekannten Verfahren durch die teils massive Warmwasserüberproduktion und den zur Beseitigung notwendigen hohen anlagentechnischen und energetischen Aufwand wertvolle Ressourcen vernichtet werden. Denn der Warmwasserüberschuss kann nur unter hohem Energieeinsatz und/oder enormer Wärmemengenvernichtung bei gleichzeitigem Frischwasserverbrauch abgeführt werden. Die bekannten Verfahren weisen also große Mängel bei Energieeffizienz und Umweltfreundlichkeit auf.

Auch größere Rohfrucht- oder Kochmaischemengen bzw. heißgehaltene Maischemengen beinhalten oft eine hohe Energiemenge, die nicht genutzt wird, bzw. abgeführt werden muss.

Hiervon ausgehend liegt der vorliegenden Erfindung die Aufgabe zugrunde, die Energiebilanz in einer Brauerei, und insbesondere im Sudhausprozess, zu verbessern.

Erfindungsgemäß wird diese Aufgabe durch die Merkmale der Ansprüche 1 und 9 gelöst.

Mit Hilfe der vorliegenden Erfindung kann wirksam überschüssige Energie von thermisch behandelten Medien wie z.B. die beim Abkühlen der Würze auf Anstelltemperatur anfallende Wärmeenergie abgeschöpft und rückgewonnen werden. Die Wärmemenge, die beim Abkühlen der Würze frei wird, kann zumindest teilweise wirksam zum Aufheizen eines oder mehrerer Wärmeverbrauchers genutzt werden. Somit muss zum Aufheizen des Wärmeverbrauchers keine skeine oder nur ein geringer Anteil an primärer Energie verwendet werden. Das bedeutet, dass im gesamten Sudhausprozess zusätzlich etwa bis zu 40 % Primärenergie eingespart werden kann und gleichzeitig kann ein Überschuss an heißem Brauwasser verhindert werden. D.H., dass z. B. die Wärmemenge die nötig ist um einen Wärmeverbraucher zu beheizen zumindest zu 60 % (bis zu 100%) durch die in der ersten Wärmetauschereinrichtung bei der Abkühlung des heißen Mediums gewonnenen Wärmemenge gedeckt werden kann.

Die erfindungsgemäße Vorrichtung hat weiter den Vorteil, dass hier die Edelenergie (auf die Temperatur bezogen der obere Teil der Gesamtenergie) über einen separaten Wärmeträgerkreislauf abgeschöpft wird. D.h. bei dem üblicherweise verwendeten Wasser als Wärmeträger, werden dem System nicht ständig neue Mineralien zugeführt, womit die Ablagerung selbiger oder Verkalken wirksam verhindert werden kann. Auch aus lebensmittelhygienischen Gründen ist es vorteilhaft, wenn man den Warmwasser- bzw. Brauwasserkreislauf und den Wärmeträger- bzw. Heizmediumkreislauf trennt.

Durch den geschlossenen Wärmeträger - Kreislauf entfällt das Nachspeisen von Frischwasser, was sowohl Wasser - als auch Entsorgungskosten senkt und darüber hinaus umweltfreundlich ist.

Die in der heißen Würze gespeicherte Energie kann also wirksam zum Erhitzen des Wärmeträgers auf ein hohes Temperaturniveau verwendet werden. Die Vorrichtung kann sehr einfach in bereits bestehende Systeme integriert werden, auch wenn sie mit anderen Wärmeträgermedien arbeiten (z.B. dampfbetriebene Brauereien), und sie ist einfach nachrüstbar. Durch die oben beschriebene Energieschaukel kann der Wärmeträger immer wieder auf eine ausreichend hohe Temperatur zur Beheizung eines Wärmeverbrauchers gebracht werden, nachdem der Wärmeträger im Wärmeverbraucher in ausreichendem Maße abgekühlt wurde.

Die erste Wärmetauschereinrichtung ist dabei in Prozessrichtung nach einer Einrichtung zum Aufheizen oder Kochen oder Heißhalten von Würze oder Maische vorgesehen.

Vorteilhafterweise wird der Wärmeträger in der ersten Wärmetauschereinrichtung auf ein hohes Temperaturniveau, z.B. T1 > 85 °C, insbesondere T1 > 90 °C gebracht. Diese Temperaturen ermöglichen ein Beheizen der Wärmeverbraucher mit dem Wärmeträger -auch ohne zusätzlichen direkten oder indirekten Primärenergiewärmeeintrag.

Gemäß einer bevorzugten Ausführungsform wird beim Abkühlen z.B. der Würze auf Anstelltemperatur nicht nur eine erste Wärmetauschereinrichtung verwendet, sondern eine zweite Wärmetauschereinrichtung eingesetzt, die derart ausgebildet ist, dass unter Abkühlen der Würze oder der Maische Wasser auf eine Temperatur von T2 < T1, insbesondere auf höchstens Brauwassertemperatur, aufheizbar ist, wobei vorzugsweise ein Brauwassertank vorgesehen ist, in dem das erwärmte Wasser speicherbar ist. Die Temperatur T2 kann natürlich auch etwas, z.B. bis zu 15 Grad, höher als die Temperatur im Brauwassertank sein. Das heißt, dass beim Abkühlen der Würze sowohl Brauwasser als auch ein Wärmeträger separat aufgeheizt werden kann. Das bedeutet, dass beim Abkühlen der Würze auf Anstelltemperatur aus der Würze eine Gesamtwärmemenge Q_{G} abgeführt wird, wobei die zweite Wärmetauschereinrichtung eine Wärmemenge Q₂ auskoppelt, die Wasser auf eine Temperatur aufwärmt, die vorzugsweise < der Brauwassertemperatur ist und die erste Wärmetauschereinrichtung eine Wärmemenge Q₁ = Q_{G} - Q₂ auskoppelt. Durch diese Maßnahme kann der Überschuss an Warmwasser wesentlich reduziert werden. Das heißt, dass das Brauwasser wirksam erwärmt werden kann und gleichzeitig die sonst oft überschüssige Energie in effektiver Weise zum Erwärmen eines Wärmeträgers auf ein hohes Temperaturniveau genutzt werden kann.

Die durch die erste Wärmetauschereinrichtung ausgekoppelte Wärmemenge entspricht meist dem Überschuss an Wärmeenergie, der nicht zur Erwärmung von Wasser bzw. Brauwasser verwendet wird.

Gemäß einer bevorzugten Ausführungsform ist die erste Wärmetauschereinrichtung mit einem Energiespeichertank, vorzugsweise einem einzigen, verbunden, worin der von der Wärmetauschereinrichtung erhitzte Wärmeträger zwischengespeichert wird, wobei vorzugsweise auch der im Wärmeverbraucher abgekühlte Wärmeträger in diesem Energiespeichertank speicherbar ist.

Es ist besonders vorteilhaft, wenn der Energiespeichertank als Schichtenspeicher ausgebildet ist, derart, dass der Wärmeträger an unterschiedlichen Höhen, automatisch oder gezielt ein- und ausgelagert werden kann, beispielsweise mittels Schichtladelanze und/oder Mischventil(e). Durch die mehreren Ein- und Auslagerungsanschlüsse kann der Wärmeträger dem Energiespeicher mit einer vorbestimmten Temperatur entnommen werden oder aber auch ein Wärmeträger mit einer bestimmten Temperatur gezielt an einer bestimmten Stelle in dem Tank eingelagert werden. Dies führt zu einer vereinfachten und sicheren Prozessführung. Der Schichtenspeicher ermöglicht also den Einsatz von unterschiedlichen Wärmelieferanten und Wärmeverbrauchern. Dadurch, dass der Wärmeverbraucher vorzugsweise mit Heißwasser beheizt wird und nicht mit z.B. Dampf oder Hochdruckheißwasser (HDHW), kann als Energiespeicher ein normaler Wassertank verwendet werden. Es muss also z.B. kein Druckgefäß eingesetzt werden, wodurch deutlich Kosten gespart werden können. Es ist auch möglich, dass ein Wärmeverbraucher über eine Wärmetauscherfläche verfügt, die mit Heißwasser betrieben wird (zum Beispiel die Zargenheizfläche eines Maischgefäßes) und eine weitere Wärmetauscherfläche, die mit Primärenergie, zum Beispiel Dampf oder HDHW betrieben wird (zum Beispiel die Bodenheizfläche eines Maischgefäßes).

Es ist also ganz besonders vorteilhaft, wenn die Vorrichtung eine Einrichtung zum Einstellen einer vorbestimmten konstanten Temperatur T4 des Wärmeträgers (d.h. die Temperatur vor Eintritt in die Wärmetauschereinrichtung) vorzusehen. Eine solche Einrichtung kann beispielsweise ein oder mehrere Mischventil(e) umfassen. Das oder die Mischventile können dann den Wärmeträger, der an unterschiedlichen Auslagerungsanschlüssen eines Schichtenspeichers entnommen wird, gezielt mischen, derart, dass eine vorbestimmte Temperatur T4 erzeugt wird. Die Temperatur T4 ist vorzugsweise konstant oder liegt in einem konstanten Bereich derart, so dass unabhängig von Schwankungen des Energieverbrauchs in dem oder den Wärmeverbraucher(n) eine Energieschaukel mit ausgeglichener Energiebilanz realisiert werden kann. Das Einstellen der Temperatur T4 kann über eine nicht extra dargestellte Regeleinrichtung erfolgen.

Die Vorrichtung kann zum Einlagern von Wärmeträger an einer bestimmten Höhe - entsprechend einer Temperatur des Wärmeträgers - eine Schichtladelanze umfassen
Gemäß einer bevorzugten Ausführungsform ist zwischen der ersten Wärmetauschereinrichtung und dem Wärmeverbraucher eine Einrichtung vorgesehen, die den Wärmeträger zusätzlich erwärmen oder nachheizen kann. Eine solche Einrichtung kann zugeschaltet werden, um fehlende Energie/Temperatur für besondere Grenzfälle zur Verfügung zu stellen. Zum Beispiel können zu Wochenbeginn die Verluste vom Wochenende etc. ausgeglichen werden.

Es kann auch mindestens ein weiterer Zusatzwärmetauscher vorgesehen sein, der Brauwasser vorerwärmt, aufwärmt oder nachheizt, wobei die Wärmemenge zum Erwärmen des Wassers aus überschüssiger Energie bzw. Abwärme, insbesondere aus heißem Wasserdampf aus dem Pfannendunstkondensator oder Warmwasser aus dem Tunnelpasteur, der KZE, oder z.B. auch aus einer thermischen Solaranlage gewonnen wird. Das heißt, wenn aufgrund der erfindungsgemäßen Energieschaukel im Warmwassertank kein überschüssiges Warmwasser mehr vorhanden ist, sondern es hier eher zu einem "Warmwassermangel" kommt, kann dem Brauwasser zusätzlich Wärmeenergie zugeführt werden.

Bei dem erfindungsgemäßen Verfahren kann der Wärmeträger auf ein sehr hohes Temperaturniveau, vorzugsweise > 85 °C, insbesondere > 90 °C, aufgeheizt werden. Beim Eintritt in die erste Wärmetauschereinrichtung weist der Wärmeträger W vorzugsweise eine Temperatur T4 in einem Bereich von 60 °C bis 90 °C auf. T4 ist dabei konstant oder liegt in einem relativ kleinen Sollbereich von T4 ± 2°C. Das heißt, dass der Wärmeträger schon relativ warm in die erste Wärmetauschereinrichtung einläuft und von der ersten Wärmetauschereinrichtung auf ein höheres Temperaturniveau gebracht wird. Dabei ist die Temperaturdifferenz ΔT bei der ersten Erwärmung des Wärmeträgers W in der ersten Wärmetauschereinrichtung in einem Bereich ≦ 40 °C. So kann der Wärmeträger, der als Heizmedium für die Wärmeverbraucher eingesetzt wird, auf ein hohes Niveau gebracht bzw. gehalten werden.

Die erste Wärmetauschereinrichtung kann auch gesplittet, vor und/oder im und/oder nach einer möglichen Einrichtung zur Heißtrubabscheidung vorgesehen sein. Wenn eine Heißtrubabscheidung vorhanden ist, ist es vorteilhaft, wenn ein Teil der Wärmeenergie vor der Einrichtung der Heißtrubabscheidung, z.B. vor dem Whirlpool, angeordnet ist, da hierdurch die Nachbildung von freiem DMS weitgehend verringert werden kann.

Selbstverständlich ist die Wärmetauschereinrichtung nicht auf dieses Ausführungsbeispiel beschränkt. Eine derartige Wärmetauschereinrichtung kann an und in weiteren Einrichtungen, die im Bier, Getränke oder Lebensmittel herstellenden Betrieben vorhanden ist, eingesetzt werden.

Über die zweite Wärmetauscheinrichtung kann gemäß einer bevorzugten Ausführungsform insbesondere Eiswasser aus dem Eiswassertank oder Kaltwasser aus dem Kaltwassertank, auf die zweite Temperatur T2 aufgeheizt werden, wobei T2 < T1 und die zweite Temperatur T2 vorteilhafterweise höchstens einer Brauwassertemperatur im Bereich von 60 °C bis 85 °C entspricht, wobei das erwärmte Wasser vorzugsweise in einem Warmwassertank gespeichert wird.

Gemäß einer bevorzugten Ausführungsform kann, nachdem der Wärmeträger W in der ersten Wärmetauschereinrichtung erhitzt wurde, der Wärmeträger W zusätzlich weiter auf eine Temperatur T3 > T1 erhitzt werden, wobei über eine Steuer- und/oder Regeleinrichtung der Wärmeträger W verbraucher- oder prozessabhängig (temperatur- oder mengenabhängig) auf die Temperatur T3 nachgeheizt werden kann.

Bei dem erfindungsgemäßen Verfahren kann auch Brauwasser mit Hilfe von überschüssiger Energie bzw. Abwärme, die in der Brauerei anfällt, direkt oder indirekt erhitzt oder vorerhitzt werden und bevorzugt in einen Warmwassertank bzw. Brauwassertank zwischengelagert werden.

Die vorliegende Erfindung wird nachfolgend unter Bezugnahme der folgenden Figuren näher erläutert.
Fig. 1
   zeigt grob schematisch eine mögliche Ausführungsform gemäß der vorliegenden Erfindung.
Fig. 2
   zeigt schematisch eine beispielhafte Wärmemengenverteilung der bei der Abkühlung der Würze frei werdenden Wärmemenge.
Fig. 3
   zeigt ein Blockdiagramm das das erfindungsgemäße Verfahren verdeutlicht.
Fig. 4
   zeigt grob schematisch eine zweite Ausführungsform gemäß der vorliegenden Erfindung.
Fig. 5
   zeigt grob schematisch einen weiteren Wärmeverbraucher gemäß der vorliegenden Erfindung

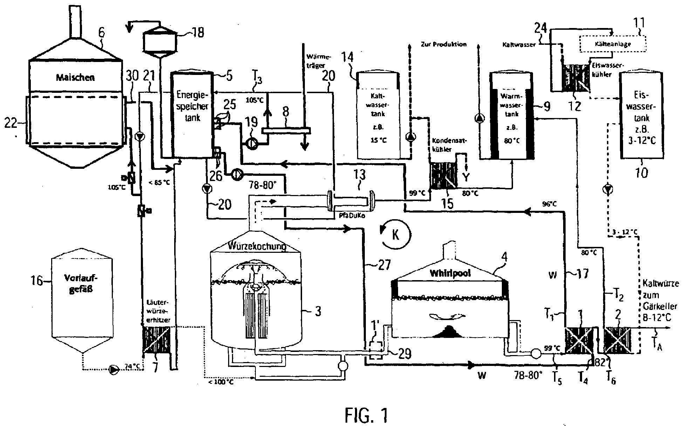

Fig. 1 zeigt grob schematisch eine Ausführungsform gemäß der vorliegenden Erfindung, bei der Energie aus heißer Würze rückgewonnen wird. Wie aus Fig. 1 zu erkennen ist, weist die Vorrichtung eine Einrichtung zum Kochen oder Heißhalten der Würze 3 auf. Hier ist weiter ein Vorlaufgefäß 16 vorgesehen, in dem sich die zu kochende Würze befindet. Ferner ist vor der Einrichtung zum Kochen oder Heißhalten der Würze 3 ein Läuterwürzeerhitzer 7 vorgesehen, der die zu kochende/heisszuhaltende Würze vorheizt, und zwar auf eine Temperatur ≦ Kochtemperatur (z.B. 100°C). Die in dieser Anordnung beispielhaft gezeigte Einrichtung zum Kochen der Würze weist einen Innenkocher auf, über den die Würze atmosphärisch gekocht wird. Selbstverständlich kann der Würzekochprozess auch mit anderen Wärmetauschern (z.B. Aussenkocher) im Unter- oder Überdruckbereich kontinuierlich oder diskontinuierlich durchgeführt werden.

Weiter ist hier eine Einrichtung zum Abscheiden des Heißtrubs, hier in Form eines Whirlpools 4, vorgesehen. Schließlich umfasst die Vorrichtung eine erste Wärmetauschereinrichtung 1 für die Erwärmung eines Wärmeträgers W, die nach der Einrichtung 3 zum Kochen oder Heißhalten der Würze angeordnet ist.

Die Wärmetauschereinrichtung 1 kann beispielsweise als Plattenkühler ausgebildet sein, deren eine Seite von Würze und die andere von dem Wärmeträger W, im Gegenstromprinzip, angeströmt wird. Bei diesem Ausführungsbeispiel ist die erste Wärmetauschereinrichtung nach der Einrichtung zum Abscheiden des Heißtrubs 4 vorgesehen. Es ist jedoch auch möglich, die erste Wärmetauschereinrichtung 1', wie gestrichelt dargestellt, vor der Einrichtung 4 zur Heißtrubabscheidung anzuordnen. So kann die DMS-Neubildung der heißen Würze verhindert werden.

Ferner ist erfindungsgemäß eine zweite Wärmetauschereinrichtung 2 vorgesehen, die die bereits durch die erste Wärmetauschereinrichtung 1 abgekühlte Würze weiter auf Anstelltemperatur TA (<15 °C, z.B. 11° C) abkühlt. Die zweite Wärmetauschereinrichtung 2 umfasst hier wiederum mindestens einen entsprechenden Wärmetauscher, hier Plattenkühler.

Ferner ist in Fig. 1 ein Eiswassertank 10 gezeigt, in dem Eiswasser (das ist zusätzlich abgekühltes Brauwasser) eingelagert ist, das als Kühlmedium für die zweite Wärmetauschereinrichtung 2 dient. Zur Herstellung des Eiswassers ist ferner ein Eiswasserkühler 12, eine Kälteanlage 11, sowie eine Kaltwasserzufuhr 24 (Brauwasser), vorgesehen. Das Kaltwasser kann auch aus dem Kaltwassertank 14 entnommen werden (hier nicht dargestellt).

Schließlich weist die Vorrichtung einen Warmwassertank bzw. Brauwassertank 9 auf, in dem Warmwasser bzw. Brauwasser zur weiteren Nutzung gespeichert ist, beispielsweise zum Einmaischen von Maische oder Anschwänzen beim Läuterprozess.

Schließlich weist die Vorrichtung noch einen Energiespeichertank 5 auf, in dem der von der ersten Wärmetauschereinrichtung 1 aufgeheizte Wärmeträger eingelagert werden kann. Dazu kann der Energiespeichertank mehrere Einlagerungsanschlüsse 25, sowie mehrere Auslagerungsanschlüsse 26 auf unterschiedlicher Höhe des Energiespeichertanks aufweisen. Da im Schichtenspeicher die Temperatur des eingelagerten Wärmeträgers von unten nach oben zunimmt, ist es immer möglich, den Wärmeträger in einem bestimmten passenden Temperaturbereich ein- oder auszulagern. Somit wird der Grundstein zur Verwendung unterschiedlicher Wärmelieferanten und Verbraucher gelegt. Das Einlagern kann aber auch fließend über eine hier nicht dargestellte Schichtladelanze erfolgen. Dabei kann der Wärmeträger gezielt, entsprechend einer bestimmten Temperatur des Wärmeträgers, in einem bestimmten Höhenbereich eingelagert werden. Um eine vorbestimmte konstante Temperatur T4 des Wärmeträgers, der der ersten Wärmetauschereinrichtung 1 zugeführt wird, einstellen zu können, ist eine Einrichtung zum Einstellen der vorbestimmten Temperatur T4 vorgesehen, die insbesondere mindestens ein Mischventil umfassen kann, derart, dass an unterschiedlichen Höhen ausgelagerter Wärmeträger entsprechend gemischt wird. Dazu können auch mehrere Temperatursensoren und eine Regeleinrichtung vorgesehen sein. T4 ist dabei konstant oder liegt in einem relativ kleinen Sollwertbereich von T4 ± 2°C. Somit kann eine Wärmeschaukel mit ausgeglichener Energiebilanz unabhängig von Schwankungen der im Wärmeverbraucher verbrauchten Energie und unabhängig von sich ändernden Rücklauftemperaturen 30 aus einem Wärmeverbraucher, realisiert werden.

Aus dem Energiespeichertank kann also der Wärmeträger zum Heizen von mindestens einem Wärmeverbraucher entnommen werden. Man kann den Energiespeichertank so groß auslegen, dass er ausreichend Wärmeträger W für mehrere Wärmeverbraucher aufnehmen kann (zum Aufheizen der Maische). Dies hat neben Kostenvorteilen auch wärmetechnische Vorteile. Ein größerer Speicher ist i.d.R. günstiger als zwei einzelne mit gleicher Größe. Ein einzelner größerer Speicher hat weiter ein besseres Oberflächen / Volumen Verhältnis und damit auch geringere Wärmeverluste. Es ergibt sich ein geringerer Verrohrungsaufwand und auch der Aufwand für Isolierung kann gesenkt werden.

Als Wärmeverbraucher umfasst die Vorrichtung hier eine Heizeinrichtung 22 einer Maischvorrichtung 6, sowie den bereits genannten Läuterwürzeerhitzer 7.

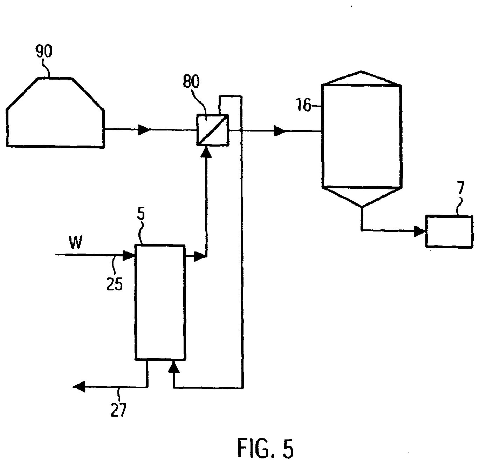

Ein weiterer Läuterwürzeerhitzer 80 kann sich - als ein Wärmeverbraucher - auch zwischen dem Läuterapparat 90 (z.B. Läuterbottich oder Maischefilter) und dem Läuterwürzeerhitzer 7 befinden (siehe Figur 5). Hier befindet sich der Wärmeverbraucher zwischen Läuterapparat 90 und Vorlaufgefäß 16. Dies hätte den Vorteil, dass hier unter Verwendung z. B. der bereits vorhandenen Läuterpumpe, aufgrund des niedrigen Volumenstroms und Wärmestroms, ein relativ kleiner Wärmetauscher Apparat eingesetzt werden kann. Hierbei kann die Läuterwürze auch z.B. nur um 10 bis 15°C in der Temperatur angehoben werden, was eine niedrige thermische Würzebelastung bedeutet und aber auch den Einsatz eines Wärmeträgers auf niedrigerem Temperaturniveau ermöglicht (Wärmeträger mit einer treibenden Kraft d.h. mit einer Temperatur von z.B. nur 2°C bis 10°C über der jeweiligen Würze- Zieltemperatur). Dieser Wärmeverbraucher kann zu 100% über den Wärmeträger W beheizt werden.

Die Heizung 22 für die Maischeinrichtung ist derart ausgelegt, dass sie einen guten Wärmedurchgangskoeffizienten aufweist. Der Wärmeträger fließt zum Beheizen durch die Heizung und erwärmt dabei eine Kontaktfläche zur Maische. Vorzugsweise weist die Kontaktfläche zur Verbesserung des Wärmeübergangs taschenförmige Erhebungen auf. Diese Ausgestaltung macht es möglich, dass ein k-Wert von üblicherweise 1800 - 2500 W/m²K erzielt werden kann, so dass die Beheizung über den durch die Wärmetauschereinrichtung 1 erwärmten und im Kreislauf K geführten flüssigen Wärmeträger und somit die erfindungsgemäße Energieschaukel sinnvoll möglich wird.

Die Heizung muss nicht unbedingt innerhalb eines Gefäßes sein, sondern kann auch außerhalb als externer Wärmetauscher ausgelegt sein.

Zum Beheizen des mindestens einen Wärmeverbrauchers 6 ist hier eine Wärmeschaukel vorgesehen, wobei ein Wärmeträger W im Kreislauf K geführt wird.

Die Einrichtung zum Kochen oder Heißhalten von Würze 3 steht weiter mit einem Pfannendunstkondensator 13 in Verbindung, über den dem Wärmeträger zusätzliche Wärmeenergie zugeführt werden kann. Über den Dampf oder Kondensat des Pfannendunstkondensators kann über den zusätzlichen Wärmetauscher 15 auch Wasser erwärmt werden und dem Warmwassertank 9 zugeführt werden, oder auch der Wärmeträger des Energiespeichertanks nachgeheizt werden (nicht dargestellt).

Schließlich ist zwischen der ersten Wärmetauschereinrichtung 1 und z.B. dem Wärmeverbraucher 6, 7 eine Einrichtung 8 vorgesehen, die den Wärmeträger W zusätzlich erwärmen kann. Die Einrichtung 8 kann ebenfalls durch einen Wärmetauscher realisiert werden, indem ein anderer Wärmeträger den Wärmeträger W auf eine höhere Temperatur aufheizt. Die Wärmetauschereinrichtung 8 kann auch im Energiespeicher angeordnet sein. Der Energiespeichertank 5 ist hier mit einem Ausdehnungsgefäß 18 verbunden.

Nachfolgend wird das erfindungsgemäße Verfahren anhand der in Fig. 1 gezeigten Vorrichtung näher erläutert.

Würze aus einem Vorlaufgefäß 16 wird zunächst einem Läuterwürzeerhitzer 7 beispielsweise mit einer Temperatur von 74 °C zugeführt, und durch den Läuterwürzeerhitzer 7 insbesondere auf eine Temperatur ≦ Koch- oder Heisshaltetemperatur vorgewärmt. In herkömmlicher Weise kann dann die Würze in einer Einrichtung zum Kochen von Würze gekocht werden, so dass diese eine Temperatur ≧ Kochtemperatur aufweist. Statt der in Fig. 1 gezeigten Würzekochvorrichtung kann auch eine Einrichtung zum Heißhalten der Würze verwendet werden, in der die Würze über eine bestimmte Dauer auf einem hohen Temperaturniveau (unter Kochtemperatur), beispielsweise 85 bis 99 °C, gehalten wird. Selbstverständlich kann der Prozess der Würzekochung auch unter Über- oder Unterdruck mit den druckkorrespondierenden Temperaturen stattfinden. Die heiße Würze wird nun über die Leitung 29 einer Einrichtung zum Abscheiden des Heißtrubs, insbesondere einem Whirlpool 4, zugeleitet.

In Prozessrichtung hinter der Einrichtung zum Kochen oder Heißhalten von Würze 3 passiert dann die vom Heißtrub befreite Würze die erste Wärmetauschereinrichtung 1. Die Würze hat hier beispielsweise eine Temperatur T5 in einem Bereich von 90 °C bis 99 °C, hier vorzugsweise 99 °C.

In dieser Wärmetauschereinrichtung wird die Würze nun auf eine Temperatur T6, beispielsweise in einem Bereich von 75 °C bis 85 °C, hier 82 °C gekühlt. Zum Abkühlen der Würze dient ein Wärmeträger W, beispielsweise in Form von Wasser, Kühlmittel, Thermoöl, etc. Der Wärmeträger W wird dabei auf ein höheres Temperaturniveau aufgeheizt. Bei diesem konkreten Ausführungsbeispiel ist die Einlauftemperatur T4 des Wärmeträgers in die erste Wärmetauschereinrichtung 1 in einem Bereich von etwa 60 °C bis 90 °C, vorteilhafterweise 75 °C bis 85 °C. Die Einlauftemperatur T4 wird konstant oder in einem konstanten Bereich gehalten.

Beim Abkühlen der Würze auf Anstelltemperatur TA z.B. 11°C wird der Würze eine Gesamtwärmemenge Q_{G} entzogen. Die erste Wärmetauschereinrichtung entzieht dabei der heißen Würze eine erste Wärmemenge Q₁. Der Wärmeträger wird dabei auf jeden Fall auf Temperaturen > 85 °C, vorzugsweise > 90 °C, aufgeheizt, in diesem konkreten Ausführungsbeispiel auf 96 °C derart, dass der Wärmeträger W einen Wärmeverbraucher beheizen kann. Vorteilhafterweise soll die Temperatur T1 etwa 5 °C bis 60 °C höher sein als die Temperatur auf die die, das zu erwärmende Medium in Form der Maische in dem Wärmeverbraucher 6 erhitzt werden soll.

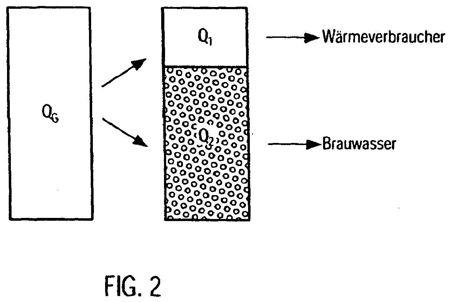

Wie also insbesondere aus Fig. 2 hervorgeht, wird der Gesamtwärmemenge Q_{G}, die bei Abkühlung der Würze frei wird, die Wärmemenge Q₁ entzogen, die vorteilhafterweise mindestens 20 % der Gesamtwärmemenge Q_{G} ausmacht.

Auch wenn in diesem Ausführungsbeispiel nicht gezeigt, so wäre es möglich, dass bereits in der ersten Wärmetauschereinrichtung 1 die Würze auf Anstelltemperatur TA abgekühlt wird und dabei der Wärmeträger W auf eine hohe Temperatur erhitzt wird.

In diesem besonders vorteilhaften Ausführungsbeispiel ist jedoch eine zweite Wärmetauscherstufe mit einer zweiten Wärmetauschereinrichtung 2 vorgesehen, mit der die Würze von einer Einlauftemperatur T6 auf die Anstelltemperatur TA abgekühlt wird. Dabei wird, wie insbesondere aus Fig. 2 hervorgeht, der Würze eine zweite Wärmemenge Q₂ entzogen. Vorteilhafterweise wird dabei Wasser auf eine Brauwassertemperatur von 60 °C bis 85 °C erhitzt und einem Warmwasser- bzw. Brauwassertank 9 zugeleitet. Auf jeden Fall ist hier die Temperatur T2, auf die das Wasser erhitzt wird, kleiner als T1, d.h. die Temperatur, auf die der Wärmeträger erhitzt wird. Als Kühlmittel dient in der zweiten Wärmetauschereinrichtung z.B. Kaltwasser bzw. Eiswasser aus einem Eiswassertank 10, das beispielsweise eine Temperatur von 3 °C bis 12 °C aufweisen kann. Das Eiswasser wurde mit Hilfe einer Kälteanlage 11 und einem Eiswasserkühler 12 erzeugt.

Das bedeutet nun, dass sich die beim auf Anstelltemperatur TA frei werdende Gesamtwärmemenge Q_{G} wie folgt aufteilt: Q_{G} = Q₁ + Q₂ (wobei Q₂ = Qₙ, wenn sich die zweite Wärmetauschereinrichtung aus mehreren n Wärmetauschern zusammensetzt, d.h. wenn noch weitere Wärmetauscher zu dem in Fig. 1 gezeigten Wärmetauscher dazu geschaltet werden). Das bedeutet nun vorteilhafterweise, dass die Energie, die bislang wie in der Beschreibungseinleitung ausgeführt wurde, verworfen wurde, nun wirkungsvoll zum Heizen von mindestens einem Wärmeverbraucher 6 oder 6 und 7 genutzt werden kann. Durch den Entzug einer ersten Wärmemenge Q₁, bei gleichzeitigem Abkühlen der Würze kann ein Warmwasserüberschuss im Tank 9 vermieden werden. In besonderen Fällen kann trotzdem noch ein Energieüberschuss vorhanden sein, der mittels weiterer Wärmetauscher (-stufen) Qₙ abgeführt und z.B. in einen Warmwassertank mit einem niedrigeren Temperaturniveau als dem Brauwassertank, zwischengespeichert werden kann (z.B. zur späteren Verwendung als Spülwasser).

Anders als in dieser Ausführungsform könnte das Warmwasser auch auf eine Temperatur T2 erwärmt werden, die etwas unter der Brauwassertemperatur, (wie sie z.B. für gewisse Brauprozesse in der Brauerei benötigt werden) aufgeheizt werden, wobei dann noch zusätzliche Einrichtungen vorgesehen sein können, die das durch die zweite Wärmetauschereinrichtung erhitzte Warmwasser weiter erhitzen. Zusätzlich oder alternativ dazu können auch zusätzliche Wärmetauscher 15, Kaltwasser auf Brauwassertemperatur aufheizen, wobei die Wärmemenge zum Erwärmen des Wassers dann aus überschüssiger Energie bzw. Abwärme, insbesondere aus heißem Wasserdampf oder Kondensat aus einem Pfannendunstkondensator 13 gewonnen wird. Dieses Warmwasser wird dann ebenfalls dem Warmwassertank 9 oder dem Energiespeichertank 5 zugeführt.

Der in der ersten Wärmetauschereinrichtung 1 erwärmte Wärmeträger W wird dann im Energiespeichertank 5 an einer - der Temperatur entsprechenden - Höhe durch einen Einlagerungsanschluss 25 eingeleitet. Zur Bestimmung des entsprechenden Einlagerungsanschlusses kann die Temperatur des Wärmeträgers bestimmt und mit den Speichertemperaturen verglichen werden und durch Schalten von nicht dargestellten Ventilen an der entsprechenden Stelle eingelassen werden. Dies kann von einer automatischen Steuer- und Regeleinrichtung durchgeführt werden.

In einem oberen Bereich des Energiespeichertanks kann über eine nicht dargestellte Ventilschaltung der heiße Wärmeträger über die Leitung 21 mindestens einem Wärmeverbraucher zugeführt werden. Hier ist der Wärmeverbraucher die Heizung 22 der Maischeinrichtung 6. Die Aufheizrate in der Maischeinrichtung 6 kann z.B. durch Einstellen der Durchflussrate und der Temperatur des Wärmeträgers eingestellt werden. Der abgekühlte Wärmeträger verlässt über die Leitung 30 die Heizeinrichtung 22 und wird entweder direkt der ersten Wärmetauschereinrichtung 1 im Kreislauf K zugeführt oder wird zunächst wieder dem Energiespeichertank 5, und zwar in dessen unteren Bereich, eingeleitet. Der Wärmeträger kühlt sich hier um vorzugsweise 10 - 20°C ab. Wird der Wärmeträger wieder in den Energiespeichertank 5 geleitet, so wird er dann über einen, der Temperatur entsprechenden, Auslagerungsanschluss über die Leitung 27 im Kreislauf K zu der ersten Wärmetauschereinrichtung 1 rückgeführt. Auch hier kann zur Wahl des Anschlusses eine Temperaturmessung durchgeführt werden, wobei dann von der Steuer- und Regeleinrichtung ein bestimmter Anschluss gewählt und über nicht dargestellte Ventile geöffnet wird. Der Wärmeträger kann auch über mindestens ein Mischventil auf eine bestimmte konstante Temperatur T4 gebracht werden, indem der Wärmeträger z.B. über mehrere Auslagerungsanschlüsse entnommen und entsprechend gemischt wird.

Durch die mehreren Auslagerungsanschlüsse 26, die über die Höhe verteilt sind, kann somit eine, für den entsprechenden Prozess angepasste Rücklauftemperatur, auf einfache Art und Weise (z.B. über ein Mischventil) eingestellt werden. Der Wärmeträger, der nun erneut der Wärmetauschereinrichtung 1 rückgeführt wird, weist eine konstante Temperatur T4 in einem Bereich von 60 °C bis 90 °C auf, derart, dass mit der Wärmetauschereinrichtung 1 der Wärmeträger nun auf ein höheres Temperaturniveau gehoben werden kann. Die Temperaturdifferenz ΔT bei der Erwärmung des Wärmeträgers W in der ersten Wärmetauschereinrichtung 1 liegt dabei vorzugsweise in einem Bereich kleiner gleich 40 °C, d.h. vorzugsweise 10 °C bis 25 °C. Somit kann sichergestellt werden, dass eine ausreichende Menge an Wärmeträger auf hohem Temperaturniveau bereitgestellt werden kann. Zum Erzeugen einer Wärmeschaukel ist es also auch wesentlich, dass am Wärmeverbraucher in Form der Maischeinrichtung 6 die Energieabnahme derart gut ist, dass eine Rücklauftemperatur des Wärmeträgers, insbesondere eine Temperatur T4, erzielt werden kann, die ermöglicht, eine bestimmte Wärmemenge Q₁ aus der heißen Würze auszukoppeln.

Die Wärmemenge Q bezieht sich auf die Wärmemenge pro Einheit, d.h. beispielsweise auf Wärmemenge pro Sud oder aber z.B. bei kontinuierlicher Bierbrauerei auf Wärmemenge pro Einheit an hergestellter Würze.

Der Wärmeträger W wird dann, wie zuvor beschrieben, erneut über die Leitung 17 im Kreislauf in den Energiespeichertank 5, oder direkt zu einem Verbraucher geleitet.

Mit der gezeigten Wärmeschaukel kann mindestens ein Wärmeverbraucher 6 oder auch weitere Wärmeverbraucher beheizt werden. Wenn notwendig, d.h., beispielsweise zu Wochenbeginn, um die Verluste vom Wochenende oder Ähnlichem auszugleichen oder bei fehlender Energie oder zu niedrigem Temperaturniveau für besondere Grenzfälle kann zwischen der ersten Wärmetauschereinrichtung 1 und dem Wärmeverbraucher 6 eine Einrichtung 8 vorgesehen sein, die den Wärmeträger W zusätzlich erwärmt. Eine Steuer- und/oder Regeleinrichtung (nicht dargestellt) bestimmt, ob die Heißwassermenge und Temperatur im Energiespeichertank 5 ausreichend für den Bedarf der Wärmeverbraucher ist und schaltet dann zusätzlich die Einrichtung 8 zu. Die Einrichtung 8 kann ebenfalls eine Wärmetauschereinrichtung sein, wobei dann beispielsweise der Wärmeträger aus der Leitung 17 über die Pumpe 19 dieser Einrichtung 8 zugeführt wird und von dieser auf eine Temperatur, die größer als die Temperatur T1 ist (z. B. auf bis zu 130°C oder bis zu 140°C) erhitzt wird. Dieser erhitzte Wärmeträger W wird dann in den oberen Bereich des Energiespeichertanks 5 eingeleitet. Es ist auch möglich, nur einen Teil des Wärmeträgers W zusätzlich zu erhitzen, außerdem kann diese Nachheizeinrichtung auch direkt im/am Energiespeichertank angeordnet sein.

Schließlich ist es auch möglich, über eine Leitung 20, aus dem unteren Bereich (oder auch wie vorher beschrieben, über verschiedene Anschlüsse im unteren Bereich, die hier aber nicht dargestellt sind), des Energiespeichertanks 5 Wärmeträger zu entnehmen und mit Hilfe des Pfannendunstkondensators 13 über eine entsprechende Wärmetauschereinrichtung darin auf eine höhere Temperatur aufzuheizen und (evtl. über verschiedene Anschlüsse) in den oberen Bereich des Energiespeichertanks 5 einzuleiten.

Zusätzlich zu der Heizeinrichtung 22 der Maischeinrichtung 6 kann auch ein Läuterwürzeerhitzer 7, oder ein anderer Wärmeverbraucher über den Wärmeträger W beheizt werden. Auch hier wird der abgekühlte Wärmeträger wieder in den unteren Bereich des Energiespeichertanks 5 rückgeführt (hier nur in einem Punkt dargestellt).

Durch die erfindungsgemäße Energieschaukel ergeben sich unter anderem folgende Vorteile:
Mit Hilfe der vorliegenden Erfindung kann wirksam überschüssige Energie beim Abkühlen der Würze auf Anstelltemperatur rückgewonnen werden. Die Wärmemenge, die beim Abkühlen der Würze frei wird, kann zumindest teilweise wirksam zum Aufheizen eines Wärmeverbrauchers genutzt werden. Somit muss zum Aufheizen des Wärmeverbrauchers in Form einer Heizeinrichtung einer Maischeinrichtung, keine oder nur ein geringer Anteil an primärer Energie verwendet werden. Das bedeutet, dass im gesamten Sudhausprozess etwa 40 % Primärenergie eingespart werden kann und zugleich ein Brauwasserüberschuss verhindert werden kann. Insbesondere bei einer höheren Gesamtverdampfung fällt sehr viel Energie an, die mit dieser Erfindung sinnvoll in den Prozess rückgeführt werden kann.

Als Wärmeträger W kann auch Brauwasser verwendet werden, womit der Energiespeichertank 5 und der Warmwassertank 9 kombiniert werden können. Die erfindungsgemäße Vorrichtung hat aber den Vorteil, dass ein separater Kreislauf für den Wärmeträger möglich ist, d.h. das Heizmedium und Warmwasser getrennt sind, so dass Ablagerungen von Mineralien (Verkalken) der beteiligten Wärmetauscher und Anlagenkomponenten wirksam verhindert werden kann. Auch aus lebensmittelhygienischen Gründen ist es vorteilhaft, wenn man den Warmwasser- bzw. Brauwasserkreislauf und den Wärmeträger- bzw. Heizmediumkreislauf trennt.

Durch den geschlossenen Wärmeträger - Kreislauf entfällt das Nachspeisen von Frischwasser, was sowohl Rohstoff- als auch Entsorgungskosten senkt und darüber hinaus umweltfreundlich ist.

Die in der heißen Würze gespeicherte Energie kann also wirksam zum Erhitzen des Wärmeträgers auf ein hohes Temperaturniveau verwendet werden. Die Vorrichtung kann sehr einfach in bereits bestehende Systeme integriert werden, auch wenn sie mit anderen Wärmeträgermedien arbeiten (z.B. dampf- oder hochdruckheißwasser betriebene Brauereien), und ist einfach nachrüstbar. Durch die oben beschriebene Energieschaukel kann der Wärmeträger immer wieder auf eine ausreichend hohe Temperatur zur Beheizung des Wärmeverbrauchers gebracht werden.

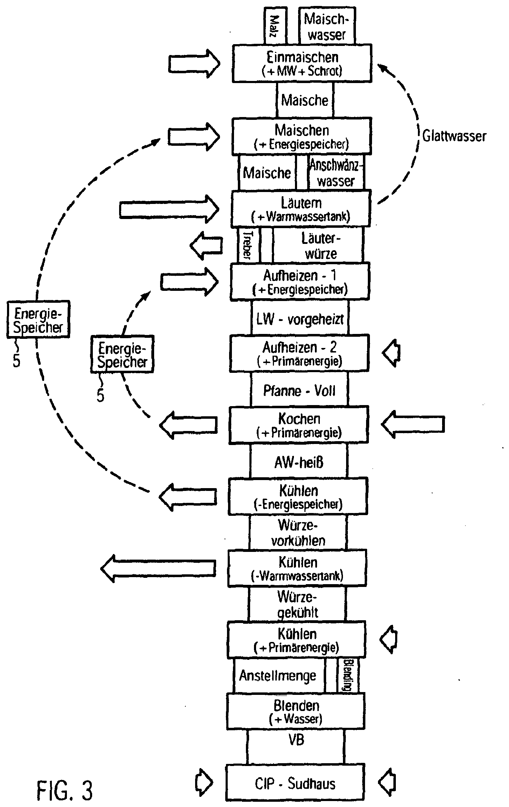

Fig. 3 zeigt die wesentlichen Schritte im Sudhausprozess und veranschaulicht nochmals die erfindungsgemäße Energieschaukel. Die Pfeile, die auf die einzelnen Prozessschritte zeigen, stellen die zugeführte Energie dar, während die von den einzelnen Schritten wegweisenden Pfeile einen Energieaustrag zeigen (ähnlich einem Sankey Diagramm). Wie also insbesondere aus Fig. 3 hervorgeht, kann beim Kühlen der heißen Würze eine Wärmemenge ausgekoppelt werden, die im Wesentlichen betragsmäßig ausreicht, um die Maische beim Maischen aufzuheizen. Beim Kochen der Würze kann beispielsweise über den Pfannendunstkondensator eine so große Wärmemenge ausgekoppelt werden, die betragsmäßig ausreicht, um die Läuterwürze aufzuheizen.

Beim weiteren Kühlen der Würze auf Anstelltemperatur kann eine ausreichende Wärmemenge ausgekoppelt werden, um Kalt- oder Eiswasser auf eine gewünschte Brauwassertemperatur zu bringen. Nur bei individuellem Bedarf kann dem Energiekreislauf noch eine zusätzliche Wärmemenge zugeführt werden.

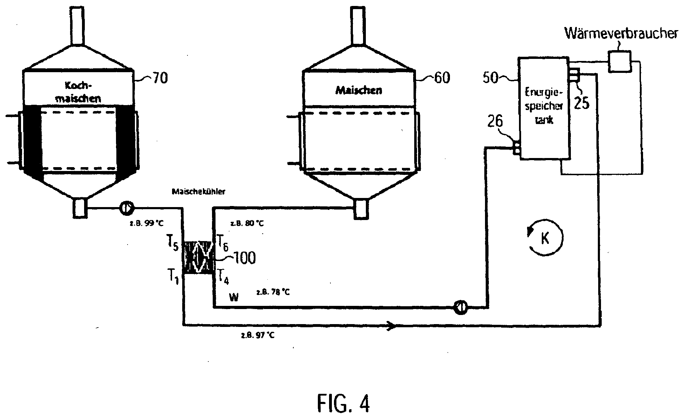

Fig. 4 zeigt ein weiteres Ausführungsbeispiel der vorliegenden Erfindung. Bei dieser Vorrichtung und dem entsprechenden Verfahren, das im Wesentlichen dem ersten Ausführungsbeispiel entspricht, wird nun Energie aus heißer Maische rückgewonnen. Dazu wird Maische, aus einer Maischeinrichtung 70, in der heißen Maische, insbesondere Kochmaische, mit einer Temperatur T5 von 90°C bis 100°C eingelagert ist, einer ersten Wärmetauschereinrichtung 100 zugeführt, und unter Aufwärmen des Wärmeträgers W auf eine Temperatur T6, hier z.B. 80 °C, abgekühlt und z.B. einer weiteren Maischvorrichtung 60 zugeführt. Gleichermaßen kann die rückgewonnene Energie aus heißer Maische auch über z.B. einen Pfannendunstkondensator im Temperaturniveau erhöht werden (hier nicht dargestellt).

Beim Abkühlen der Maische wird der Wärmeträger W, von einer Temperatur T4 auf eine Temperatur T1 aufgeheizt, hier z.B. 97 °C, und wie auch im Zusammenhang mit dem ersten Ausführungsbeispiel beschrieben, dem Energiespeichertank 50 zugeführt. Der Energiespeichertank 50 kann ein gesonderter Energiespeichertank sein. Es ist jedoch auch möglich, die hier gewonnene Wärmemenge in dem in Fig. 1 gezeigten Energiespeichertank 5 einzubringen. Entsprechend dem ersten Ausführungsbeispiel wird - entsprechend der Temperatur - der heiße Wärmeträger W über einen, der Temperatur entsprechenden, Einlagerungsanschluss 25 in den Energiespeichertank 50 eingelagert. Von hier aus kann der Wärmeträger W dann einem Wärmeverbraucher d.h. der Heizung der Maischeinrichtung 60 oder 70 zugeführt werden wobei der abgekühlte Wärmeträger dann erneut in den unteren Bereich des Energiespeichertanks 50 oder aber direkt zur ersten Wärmetauschereinrichtung 100 rückgeleitet wird. Der Wärmeträger W wird dann erneut in der ersten Wärmetauschereinrichtung erwärmt und im Kreislauf K dem Energiespeichertank 50 zugeführt. Ansonsten treffen auch die in Zusammenhang mit dem ersten Ausführungsbeispiel gemachten Angaben bezüglich der Temperaturen, Wärmemengen und Zusatzwärmetauscher für das zweite Ausführungsbeispiel zu. Insbesondere ist bei dem in Fig. 4 gezeigten Ausführungsbeispiel nur eine einstufige Kühlung gezeigt. Es ist jedoch auch möglich, wie bei dem ersten Ausführungsbeispiel eine ein- oder mehrstufige Kühlung vorzusehen.

Da bei den zuvor gezeigten Ausführungsbeispielen nun zum Beheizen der Wärmeverbraucher keine Primärenergie mehr verwendet wird, kann die klassische Peripherie für die Primärenergieversorgung wesentlich kleiner und kostengünstiger ausgeführt werden.

Bei den zuvor gezeigten Ausführungsformen ist im Kreislauf K der Energiespeichertank 5 vorgesehen. Es ist jedoch auch möglich, den Wärmeträger W direkt zu dem Wärmeverbraucher und zurück zum Wärmetauscher im Kreis zu führen.

Bei überschüssiger Energie im Energiespeichertank kann die Energie im Energiespeichertank über einen Wärmetauscher wieder für andere Verbraucher ausgekoppelt werden. Dazu kann beispielsweise ein Wärmetauscher direkt am Energiespeicher (z.B. Pillowplate) verwendet werden, oder aber ein Wärmetauscherwellrohr, das in dem Energiespeichertank eingeführt wird (hier nicht dargestellt).

Das erfindungsgemäße System kann auch für Anlagen verwendet werden, in denen mit Druckkochung der Würze gearbeitet wird. Wenn z.B. auch der Whirlpool unter Druck steht, kann Energie mit einem noch höheren Temperaturniveau durch den ersten Wärmetauscher 1 geerntet werden.

Es ist gemäß einer bevorzugten Ausführungsform auch möglich, dass über einen einzigen Energiespeichertank 5, 50 an mehrere verschiedene Wärmeverbraucher Energie insbesondere zum Erwärmen abgegeben werden kann. Es ist auch möglich, aus dem Energiespeichertank den Wärmeträger an Energielieferanten zu leiten, um Energie aufzunehmen, und dann wieder in den Tank zu leiten. Über den Energiespeichertank kann dann wiederum der Wärmeträger mit einer vorbestimmten konstanten Temperatur erneut im Kreislauf dem Wärmetauscher, d.h. insbesondere dem ersten Wärmetauscher, zugeführt werden, von dem aus der Wärmeträger wieder dem Energiespeichertank zugeleitet wird.

## Patentansprüche

1. Vorrichtung zum Rückgewinnen von Energie aus heißer Würze oder heißer Maische, für eine Bierbrauerei mit
einer ersten Wärmetauschereinrichtung (1,100) für einen Wärmeträger W, die derart ausgebildet ist, dass unter Abkühlen von Würze oder Maische der Wärmeträger W erwärmbar ist, wobei
mindestens ein Wärmeverbraucher (6,7,60,70,80) der Brauerei mit diesem Wärmeträger W beheizbar ist, und
der beim Erwärmen des Wärmeverbrauchers abgekühlte Wärmeträger W im Kreislauf K wieder der ersten Wärmetauschereinrichtung (1,100) zuführbar ist, wobei
der Wärmeverbraucher (6,7,60,70,80) eine Maischeinrichtung (6) ist.

2. Vorrichtung nach Anspruch 1, **dadurch gekennzeichnet, dass** der Wärmeträger W in der ersten Wärmetauschereinrichtung auf ein hohes Temperaturniveau, von T1> 85 °C, insbesondere > 90 °C aufgeheizt wird.

3. Vorrichtung nach Anspruch 1 oder 2, **dadurch gekennzeichnet, dass** die Vorrichtung eine zweite Wärmetauschereinrichtung (2) umfasst, die derart ausgebildet ist, dass unter Abkühlen der Würze oder Maische Wasser auf eine Temperatur T2 < T1, insbesondere auf höchstens Brauwassertemperatur aufheizbar ist, wobei vorzugsweise ein Brauwassertank (9) vorgesehen ist, in dem das erwärmte Wasser speicherbar ist.

4. Vorrichtung nach Anspruch 3, **dadurch gekennzeichnet, dass** beim Abkühlen der Würze auf Anstelltemperatur TA aus der Würze insgesamt eine Wärmemenge Q_{G} abgeführt wird, wobei die zweite Wärmetauschereinrichtung (2) eine Wärmemenge Q₂ auskoppelt, die Wasser auf die Temperatur T2 aufwärmt und die erste Wärmetauschereinrichtung eine Wärmemenge Q₁ zur Erwärmung des Wärmeträgers W auf die Temperatur T1 auskoppelt, wobei gilt Q₁ = Q_{G} - Q₂ .

5. Vorrichtung nach mindestens einem der Ansprüche 1 bis 4, **dadurch gekennzeichnet, dass** die erste Wärmetauschereinrichtung (1,100) mit einem Energiespeichertank (5,50) verbunden ist, worin der von der ersten Wärmetauschereinrichtung (1) erhitzte Wärmeträger W gespeichert wird, wobei vorzugsweise auch der im Wärmeverbraucher abgekühlte Wärmeträger W in diesem Energiespeichertank speicherbar ist und insbesondere der Energiespeichertank (5,50) als Schichtenspeicher ausgebildet ist, derart, dass der Wärmeträger in unterschiedlichen Ein- und Auslagerungsanschlüssen (25, 26) auf unterschiedlichen Höhen ein- und ausgelagert werden kann.

6. Vorrichtung nach mindestens einem der Ansprüche 1 bis 5, **dadurch gekennzeichnet, dass** in einer Leitung (17) zwischen der ersten Wärmetauschereinrichtung (1) und dem Wärmeverbraucher (6,7) eine Einrichtung (8) vorgesehen ist, die den Wärmeträger W zusätzlich erwärmen kann.

7. Vorrichtung nach mindestens einem der Ansprüche 1 bis 6, **dadurch gekennzeichnet, dass** mindestens ein weiterer Zusatzwärmetauscher (15) vorgesehen ist, der Brauwasser aufwärmt das in einen Brauwassertank (9) geleitet wird, wobei die Wärmemenge zum Erwärmen des Wassers aus überschüssiger Energie bzw. Abwärme, insbesondere aus heißem Wasser oder Wasserdampf aus dem Pfannendunstkondensator (13) gewonnen wird.

8. Vorrichtung nach mindestens einem der Ansprüche 1 bis 7, **dadurch gekennzeichnet, dass** die Wärmetauschereinrichtung (1) vor einer Einrichtung zur Heißtrubabscheidung vorgesehen ist.

9. Verfahren zum Rückgewinnen von Energie aus heißer Würze oder heißer Maische bei der Herstellung von Bier mit folgenden Schritten:
a) Aufheizen eines Wärmeträgers W in einer ersten Wärmetauschereinrichtung (1,100) auf eine Temperatur T1 unter Abkühlen der Würze oder Maische, und
b) Beheizen mindestens eines Wärmeverbrauchers (6,7,60,70,80) der Brauerei mit diesem Wärmeträger W, wobei
der in Schritt b) abgekühlte Wärmeträger W im Kreislauf K zurück zu der Wärmetauschereinrichtung (1) geführt wird, wobei
der Wärmeverbraucher (6,7,60,70,80) eine Maischeinrichtung (6) ist.

10. Verfahren nach Anspruch 9, **dadurch gekennzeichnet, dass** der Wärmeträger W auf ein hohes Temperaturniveau von T1 > 85 °C insbesondere T1 > 90 °C aufgeheizt wird und insbesondere bei Eintritt in die erste Wärmetauschereinrichtung (1,100) eine Temperatur T4 in einem Bereich von 60 bis 90 °C aufweist, wobei vorzugsweise die Temperatur T4 auf einen vorbestimmten konstanten Sollwert oder Sollwertbereich eingestellt wird.

11. Verfahren nach Anspruch 10, **dadurch gekennzeichnet, dass** die Temperaturdifferenz ΔT bei der Erwärmung des Wärmeträgers W in der ersten Wärmetauschereinrichtung (1,100) in einem Bereich < 40 °C liegt.

12. Verfahren nach mindestens einem der Ansprüche 9 bis 11, **dadurch gekennzeichnet, dass** über eine zweite Wärmetauschereinrichtung (2) Kaltwasser, insbesondere Eiswasser aus dem Eiswassertank, auf eine Temperatur T2 aufgeheizt wird, wobei T2 < T1 und die zweite Temperatur T2 vorteilhafterweise höchstens einer Brauwassertemperatur in einem Bereich von 60 bis 85 °C entspricht, wobei das erwärmte Wasser vorzugsweise in einem Warmwassertank bzw. Brauwassertank (9) gespeichert wird.

13. Verfahren nach mindestens einem der Ansprüche 9 bis 12, **dadurch gekennzeichnet, dass,** nachdem der Wärmeträger W in der ersten Wärmetauschereinrichtung (1,100) erhitzt wurde, der Wärmeträger W zusätzlich weiter auf eine Temperatur T3 > T1 erhitzt wird, wobei über eine Steuer- und/oder Regeleinrichtung der Wärmeträger W verbraucherabhängig auf die Temperatur T3 nachgeheizt wird.

14. Verfahren nach mindestens einem der Ansprüche 9 bis 13, **dadurch gekennzeichnet, dass** Brauwasser durch überschüssige Energie bzw. Abwärme, die in der Brauerei anfällt, erhitzt oder vorerhitzt wird und einem Warmwassertank (9) zugeführt wird.

15. Vorrichtung nach mindestens einem der Ansprüche 1 bis 8, **dadurch gekennzeichnet, dass** die Vorrichtung eine Einrichtung zum Einstellen einer vorbestimmten konstanten Temperatur (T4) des Wärmeträgers vor Eintritt in die Wärmetauschereinrichtung (1,100) aufweist, die insbesondere mindestens ein Mischventil umfasst und/oder die Vorrichtung eine Schichtladelanze umfasst.

## Claims

1. An apparatus for recovering energy from hot wort or hot mash, for a brewery, comprising
a first heat-exchange device (1,100) for a heat-transfer medium W, which is configured such that the heat-transfer medium W can be heated while cooling wort or mash, wherein
at least one heat consumer (6,7,60,70,80) of the brewery can be heated with said heat-transfer medium W, and
the heat-transfer medium W cooled when heating the heat consumer can be supplied again in circuit K to the first heat-exchange device (1,100), wherein
the heat consumer (6,7,60,70,80) is a mashing apparatus (6).

2. The apparatus according to claim 1, **characterized in that** the heat-transfer medium W is heated in the first heat-exchange device to a high temperature level of T1 > 85 °C, in particular > 90 °C.

3. The apparatus according to claim 1 or 2, **characterized in that** the apparatus comprises a second heat-exchange device (2), which is configured such that, while cooling the wort or mash, water can be heated to a temperature T2 < T1, in particular to at most brewing-water temperature, wherein preferably a brewing-water tank (9) is provided in which the heated water can be stored.

4. The apparatus according to claim 3, **characterized in that**, when cooling the wort to pitching temperature TA, a total quantity of heat QG is removed from the wort, wherein the second heat-exchange device (2) extracts a quantity of heat Q2 which heats water to the temperature T2, and the first heat-exchange device extracts a quantity of heat Q1 for heating the heat-transfer medium W to the temperature T1, wherein Q1 = QG - Q2.

5. The apparatus according to at least one of claims 1 to 4, **characterized in that** the first heat-exchange device (1,100) is connected to an energy storage tank (5,50) in which the heat-transfer medium W heated by the first heat-exchange device (1) is stored, wherein preferably the heat-transfer medium W cooled in the heat consumer can also be stored in said energy storage tank and, in particular, the energy storage tank (5,50) is configured as a stratified storage tank such that the heat-transfer medium can be charged and discharged at different heights via different charging and discharging connections (25,26).

6. The apparatus according to at least one of claims 1 to 5, **characterized in that** a device (8) is provided in a line (17) between the first heat-exchange device (1) and the heat consumer (6,7), which device can additionally heat the heat-transfer medium W.

7. The apparatus according to at least one of claims 1 to 6, **characterized in that** at least one further additional heat exchanger (15) is provided, which heats brewing water that is conveyed into a brewing-water tank (9), wherein the quantity of heat for heating the water is obtained from excess energy or waste heat, in particular from hot water or water vapour from the kettle-vapour condenser (13).

8. The apparatus according to at least one of claims 1 to 7, **characterized in that** the heat-exchange device (1) is provided upstream of a device for hot-trub separation.

9. A method for recovering energy from hot wort or hot mash in the production of beer, comprising the following steps:
a) heating a heat-transfer medium W in a first heat-exchange device (1,100) to a temperature T1 while cooling the wort or mash, and
b) heating at least one heat consumer (6,7,60,70,80) of the brewery with said heat-transfer medium W, wherein
the heat-transfer medium W cooled in step b) is returned in circuit K to the heat-exchange device (1), wherein
the heat consumer (6,7,60,70,80) is a mashing apparatus (6).

10. The method according to claim 9, **characterized in that** the heat-transfer medium W is heated to a high temperature level of T1 > 85 °C, in particular T1 > 90 °C, and, in particular, has a temperature T4 in a range from 60 to 90 °C upon entry into the first heat-exchange device (1,100), wherein preferably the temperature T4 is set to a predetermined constant setpoint or setpoint range.

11. The method according to claim 10, **characterized in that** the temperature difference ΔT during heating of the heat-transfer medium W in the first heat-exchange device (1,100) is in a range < 40 °C.

12. The method according to at least one of claims 9 to 11, **characterized in that**, by means of a second heat-exchange device (2), cold water, in particular ice water from the ice-water tank, is heated to a temperature T2, wherein T2 < T1 and the second temperature T2 is advantageously at most equal to a brewing-water temperature in a range from 60 to 85 °C, wherein the heated water is preferably stored in a hot-water tank or brewing-water tank (9).

13. The method according to at least one of claims 9 to 12, **characterized in that**, after the heat-transfer medium W has been heated in the first heat-exchange device (1,100), the heat-transfer medium W is additionally further heated to a temperature T3 > T1, wherein, by means of a control and/or regulating device, the heat-transfer medium W is reheated to the temperature T3 depending on the heat consumer.

14. The method according to at least one of claims 9 to 13, **characterized in that** brewing water is heated or preheated by excess energy or waste heat generated in the brewery and is supplied to a hot-water tank (9).

15. The apparatus according to at least one of claims 1 to 8, **characterized in that** the apparatus has a device for setting a predetermined constant temperature (T4) of the heat-transfer medium before entry into the heat-exchange device (1,100), which device in particular comprises at least one mixing valve and/or the apparatus comprises a stratified charging lance.

## Revendications

1. Dispositif de récupération d'énergie à partir de moût chaud ou de maische chaude, pour une brasserie, comprenant
un premier dispositif d'échange thermique (1,100) pour un fluide caloporteur W, qui est configuré de manière que le fluide caloporteur W puisse être chauffé lors du refroidissement de moût ou de maische, dans lequel
au moins un consommateur de chaleur (6,7,60,70,80) de la brasserie peut être chauffé au moyen de ce fluide caloporteur W, et
le fluide caloporteur W refroidi lors du chauffage du consommateur de chaleur peut être ramené, dans le circuit K, au premier dispositif d'échange thermique (1,100), dans lequel
le consommateur de chaleur (6,7,60,70,80) est un dispositif d'empâtage (6).

2. Dispositif selon la revendication 1, **caractérisé en ce que** le fluide caloporteur W est chauffé, dans le premier dispositif d'échange thermique, à un niveau de température élevé de T1 > 85 °C, notamment > 90 °C.

3. Dispositif selon la revendication 1 ou 2, **caractérisé en ce que** le dispositif comprend un deuxième dispositif d'échange thermique (2), qui est configuré de manière que, lors du refroidissement du moût ou de la maische, de l'eau puisse être chauffée à une température T2 < T1, notamment au plus à la température de l'eau de brassage, un réservoir d'eau de brassage (9), dans lequel l'eau chauffée peut être stockée, étant prévu de préférence.

4. Dispositif selon la revendication 3, **caractérisé en ce que**, lors du refroidissement du moût à la température d'ensemencement TA, une quantité de chaleur totale QG est évacuée du moût, le deuxième dispositif d'échange thermique (2) extrayant une quantité de chaleur Q2 qui chauffe de l'eau à la température T2, et le premier dispositif d'échange thermique extrayant une quantité de chaleur Q1 pour chauffer le fluide caloporteur W à la température T1, avec Q1 = QG - Q2.

5. Dispositif selon au moins l'une des revendications 1 à 4, **caractérisé en ce que** le premier dispositif d'échange thermique (1,100) est relié à un réservoir de stockage d'énergie (5,50), dans lequel est stocké le fluide caloporteur W chauffé par le premier dispositif d'échange thermique (1), le fluide caloporteur W refroidi dans le consommateur de chaleur pouvant de préférence également être stocké dans ce réservoir de stockage d'énergie et, notamment, le réservoir de stockage d'énergie (5,50) étant configuré comme réservoir de stockage stratifié de manière que le fluide caloporteur puisse être chargé et déchargé à différentes hauteurs par différents raccords de charge et de décharge (25,26).

6. Dispositif selon au moins l'une des revendications 1 à 5, **caractérisé en ce que** un dispositif (8), qui peut chauffer davantage le fluide caloporteur W, est prévu dans une conduite (17) entre le premier dispositif d'échange thermique (1) et le consommateur de chaleur (6,7).

7. Dispositif selon au moins l'une des revendications 1 à 6, **caractérisé en ce que** au moins un échangeur thermique supplémentaire (15) est prévu, qui chauffe de l'eau de brassage qui est conduite dans un réservoir d'eau de brassage (9), la quantité de chaleur destinée au chauffage de l'eau étant récupérée à partir d'énergie excédentaire ou de chaleur résiduelle, notamment à partir d'eau chaude ou de vapeur d'eau provenant du condenseur des vapeurs de cuve d'ébullition (13).

8. Dispositif selon au moins l'une des revendications 1 à 7, **caractérisé en ce que** le dispositif d'échange thermique (1) est prévu en amont d'un dispositif de séparation du trouble à chaud.

9. Procédé de récupération d'énergie à partir de moût chaud ou de maische chaude lors de la production de bière, comprenant les étapes suivantes :
a) chauffage d'un fluide caloporteur W, dans un premier dispositif d'échange thermique (1,100), à une température T1 lors du refroidissement du moût ou de la maische, et
b) chauffage d'au moins un consommateur de chaleur (6,7,60,70,80) de la brasserie au moyen de ce fluide caloporteur W, dans lequel
le fluide caloporteur W refroidi à l'étape b) est ramené, dans le circuit K, au dispositif d'échange thermique (1), dans lequel
le consommateur de chaleur (6,7,60,70,80) est un dispositif d'empâtage (6).

10. Procédé selon la revendication 9, **caractérisé en ce que** le fluide caloporteur W est chauffé à un niveau de température élevé de T1 > 85 °C, notamment T1 > 90 °C, et présente notamment, lors de son entrée dans le premier dispositif d'échange thermique (1,100), une température T4 dans une plage de 60 à 90 °C, la température T4 étant de préférence réglée à une valeur de consigne constante prédéterminée ou à une plage de valeurs de consigne constante prédéterminée.

11. Procédé selon la revendication 10, **caractérisé en ce que** la différence de température ΔT lors du chauffage du fluide caloporteur W dans le premier dispositif d'échange thermique (1,100) se situe dans une plage < 40 °C.

12. Procédé selon au moins l'une des revendications 9 à 11, **caractérisé en ce que**, au moyen d'un deuxième dispositif d'échange thermique (2), de l'eau froide, notamment de l'eau glacée provenant du réservoir d'eau glacée, est chauffée à une température T2, T2 < T1, et la deuxième température T2 étant avantageusement au plus égale à une température de l'eau de brassage comprise dans une plage de 60 à 85 °C, l'eau chauffée étant de préférence stockée dans un réservoir d'eau chaude ou un réservoir d'eau de brassage (9).

13. Procédé selon au moins l'une des revendications 9 à 12, **caractérisé en ce que**, après que le fluide caloporteur W a été chauffé dans le premier dispositif d'échange thermique (1,100), le fluide caloporteur W est en outre chauffé davantage à une température T3 > T1, le fluide caloporteur W étant réchauffé à la température T3, au moyen d'un dispositif de commande et/ou de régulation, en fonction du consommateur de chaleur.

14. Procédé selon au moins l'une des revendications 9 à 13, **caractérisé en ce que** de l'eau de brassage est chauffée ou préchauffée au moyen d'énergie excédentaire ou de chaleur résiduelle générée dans la brasserie et est amenée à un réservoir d'eau chaude (9).

15. Dispositif selon au moins l'une des revendications 1 à 8, **caractérisé en ce que** le dispositif comporte un dispositif de réglage d'une température constante prédéterminée (T4) du fluide caloporteur avant son entrée dans le dispositif d'échange thermique (1,100), lequel comprend notamment au moins une vanne mélangeuse et/ou le dispositif comprend une lance de charge stratifiée.
